# EUROPEAN PATENT APPLICATION

(11) **EP 3 351 697 A1**
(43) Date of publication of application: **25.07.2018**
(21) Application number: 18152344.0
(22) Date of filing: 18.01.2018
(51) Int. Cl.: E03F 3/06, E03F 3/04, F16L 21/02

(54) **GUTTER SYSTEM, GUTTER ELEMENT, TOOL AND METHOD APPLIED THEREBY**

(30) Priority: 23.01.2017 BE 201705036
(71) Applicant: Ebema, Naamloze Vennootschap, 3690 Zutendaal (BE)
(72) Inventor: PANIS, Bert, 2160 Wommelgem (BE)
(74) Representative: Donné, Eddy

(57) **Abstract**

Gutter system to form a gutter whereby the gutter system is composed of:
- tubular gutter elements (1)
- connecting sleeves (14) to connect female connecting pieces (7) of two adjacent gutter elements (1) located in each other's extension and placed opposite each other, and
- seals for mounting in a peripheral slot (9) of the aforementioned inner wall (8) of a female connecting piece (7) whereby the gutter elements (1) in unused condition are such that when mounting two adjoining unused gutter elements (1), only one of both adjoining ends (6) is fitted with a connecting sleeve (14) which is completely or practically completely retracted from the female connecting piece (7) at this end (6) and which is such that it is accessible via an aforementioned drainage channel (3) to push out the connecting sleeve (14) from this retracted position over a sufficient distance from the female connecting piece (7) into a female connecting piece (7) of the other gutter element (1)

## Description

The present invention relates to a gutter system.

In particular, the invention relates to a gutter system that is intended to form gutters to channel rainwater, waste water or the like by linking together horizontal or lightly draining tubular gutter elements made of concrete fitted with lateral drainage openings to drain the surface water to the inside of the gutters.

Gutter systems with tubular gutter elements made of concrete which on one end are fitted with a male connecting piece and on the other end are fitted with a corresponding female connecting piece such that consecutive gutter elements can be connected to each other by coupling the male and female connecting pieces.

To obtain the water tightness of the gutter, a rubber seal is fitted between both connecting pieces of the gutter elements which are compressed in an axial direction between both connecting pieces by compressing the connecting pieces deeper into each other on installation.

A disadvantage of such a known gutter system is that at the installation of a gutter the gutter elements need to be aligned perfectly in an axial direction in relation to each other to be able to slide them into each other in an efficient and correct way. Furthermore, sliding them into each other needs to be done perfectly horizontally, i.e. over the underlying foundation.

The installation therefore needs to be done very precisely with great accuracy by experienced workers and with the help of cranes or the like to fit the gutter elements into each other.

The gutter elements must be placed one after the other, aligned and fitted into each other in the same operation, which requires a lot of time in view of the precision this has to be done with.

Indeed, if the installation cannot be done in this aligned way, the seal may be unevenly compressed and in certain places is squashed between the gutter elements whereas in other places it is not compressed enough, such that unwanted leaks are possible.

Also, if after the installation a gutter element were to sag in relation to an adjacent gutter element, the seal between the two may be deformed, such that it does not form a good seal anymore and at worst the concrete may break.

The known gutter system does not allow any correction either in the case, despite the good care during the installation, a leak were to occur or, for example, an already placed gutter element or already placed seal has to be replaced, which is not possible as the gutter elements fit into each other with their ends.

Another disadvantage is that, due to the fact that most existing systems work on compressing the seal more by pushing the one tube more into the other, in the known gutter systems you can never be certain of an entirely correct sealing, as is often apparent in practice.

Gutter systems also already exist that are composed of:
- tubular gutter elements made of concrete which on both ends are fitted with a female connecting piece that is bordered by an inner wall;
- connecting sleeves to connect female connecting pieces of two adjacent gutter elements located in each other's extension and placed opposite each other whereby the connecting sleeve is entered in each of the aforementioned female connecting pieces and is sealed by means of the aforementioned seals when the gutter is in ready-to-use condition; and,
- seals for mounting in a peripheral slot of the aforementioned inner wall of a female connecting piece and/or along the outer perimeter of the connecting sleeves.

In this case the gutter elements also need to be placed one after the other with a connecting sleeve which on one end extends over a particular length, whereby a next gutter element with an end without connecting sleeve is slid over the connecting sleeve of a previously placed gutter element.

The same disadvantages also occur in this case as described above.

To this end, the invention relates to a gutter system that is composed in the same way as the last described gutter system with tubular gutter elements with female connecting pieces on both ends and fitting connecting sleeves, but whereby the gutter elements in unused condition are such that when mounting two adjoining unused gutter elements, only one of the two adjoining ends is fitted with a connecting sleeve that is completely or as good as completely retracted in the female connecting piece at this end and which is such that via an aforementioned drainage channel it is accessible to push out the connecting sleeve from this retracted position over a sufficient distance from the female connecting piece into a female connecting piece of the other gutter element to achieve a leak-tight connection between the two gutter elements.

This offers the advantage that for the installation the gutter elements need to be aligned with much less precision and that, for example, first the gutter elements can be placed one after the other and the connecting sleeves can only be put in position afterwards to achieve a leak-free connection between the two gutter elements.

Preferably the connecting sleeves of an already finished gutter can be completely retracted by a reverse operation at both ends of a gutter element via a drainage channel in the gutter element in question or the adjoining gutter element to thus be able to remove the gutter element from between the adjacent gutter elements of the finished gutter, for example to replace the gutter element or a seal or for the maintenance of the gutter or the like.

The connecting piece on each end is preferably provided with one or more seals.

Preferably the connecting sleeves in mounted ready-to-use condition have some lateral play in the female connecting pieces and at least one end of the gutter elements is fitted with two seals at an axial distance from each other which in mounted ready-to-use condition of the connecting sleeve demarcate a space between the inner wall of a female connecting piece in question and the outer wall of the connecting sleeve.

Thanks to the radial play between the connecting sleeve and the gutter elements a certain alignment tolerance can be allowed between both gutter elements.

This provides the advantage that the gutter system can compensate for a slight angular deviation between the geometric axes of the gutter elements, without jeopardising a good assembly.

In this way two consecutive gutter elements on the site can be easily connected with each other without the need to precisely align the consecutive elements in relation to each other, which requires the necessary attention and experience and moreover usually takes a long time.

In case one gutter element in relation to an adjacent gutter element were to sag, the connecting sleeve can slightly compensate for this because the connecting sleeve can set itself slightly in relation to the one or more seals.

Thanks to the double seal on the level of each end of the gutter element, the chance of leaks is in itself already at least halved and with every additional seal this chance diminishes even more.

The aforementioned space between the seals is preferably connected with the outside of the gutter element by means of a channel in the gutter element.

This channel is useful to determine whether one or both seals or both seals show possible leakages, and if so to be able to inject a sealant via this channel in the space in question that has a leak to thus seal the leak or leaks.

Preferably, the aforementioned channel is closed with a plug such that no dirt can accumulate in the space.

According to a preferred embodiment the depth of the female connecting pieces in an axial direction is limited by an inward protruding stop in relation to the inner wall of these connecting pieces which is located at a distance of the end of the female connecting piece, whereby the stop forms a limit for the depth over which the male connecting sleeve can be stuck into the female connecting piece.

This stop ensures that the connecting sleeves cannot be pushed too deep into a female connecting piece such that the connecting sleeve in question after installation is still sticking with sufficient length in both adjacent female connecting pieces to be sealed by at least one and preferably by two or more aforementioned seals in the female connecting pieces.

The invention also relates to a gutter element that is suitable for application in a gutter system according to the invention, whereby the gutter element is fitted on both ends with a female connecting piece that is bordered by an inner wall and whereby at least one female connecting piece is fitted with a connecting sleeve that is completely or practically completely slid into the female connecting piece in question.

The invention also relates to a tool for connecting gutter elements of the aforementioned gutter system, which tool is fitted with a peg which via an aforementioned drainage channel can be hooked behind a gripping element of the connecting sleeve and which in the drainage channel in question can be moved in an axial direction to axially push out the connecting sleeve from the retracted position in the female connecting piece into a female connecting piece of an adjacent gutter element or to pull it out again.

The invention also relates to a method to make a gutter using a gutter system according to the invention, whereby the gutter elements are placed one after the other with an end against each other in each other's extension in such a way that one of the adjoining ends is fitted with a connecting sleeve that is completely retracted in the female connecting piece of this end and the other adjoining end is not fitted with such a connecting sleeve and whereby the connection of both ends is done by partially pushing out the connecting sleeve along a channel of the female connecting piece into the female connecting piece of an adjacent end.

With the intention of better showing the characteristics of the invention, a few preferred embodiments of a gutter system according to the invention and the gutter element and tools applied thereby are described hereinafter by way of an example, without any limiting nature, with reference to the accompanying drawings, wherein:
figure 1 schematically and in perspective shows a gutter element and the required tool according to the invention;
figure 2 shows a cross-section according to line II-II in figure 1 1 but for two adjoining gutter elements when placing a gutter;
figure 3 on a larger scale shows the part indicated in figure 2 with frame F3;
figures 4 to 6 illustrate consecutive steps during the use of the tool to connect the two gutter elements;
figure 7 shows a cross-section such as that of figure 2, but for a variant embodiment of a gutter element according to the invention;
figures 8 and 9 show consecutive steps with the use of the tool in the embodiment of figure 7 to uncouple the gutter elements; figure 10 shows a detail of the part indicated in figure 9 by frame F10;
figure 11 shows a variant of figure 6.

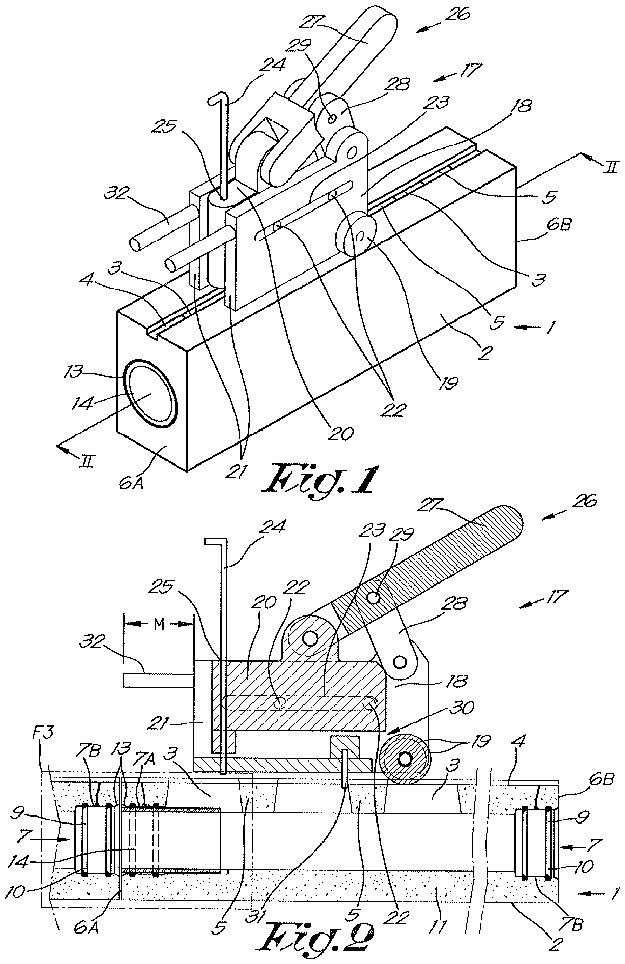

The gutter element 1 of figure 1 is shown in unused condition and is formed by a tubular gutter element 1 made of concrete with an axial X-X' axle with a wall 2 in which at the top a series of lateral drainage channels 3 are provided which radially extend through the wall 2.

In the top of the gutter element a slot 4 has been provided which extends in the axial direction and in which the series of drainage channels 3 have been provided at a distance from each other, separated from each other by wall components 5.

The gutter element is fitted on both ends 6, respectively 6A and 6B, with a female connecting piece 7, 7A and 7B respectively, that is bordered by a cylindrical inner wall 8 in which at least one circular peripheral slot 9 is provided with a seal 10 that protrudes from the inner wall 8.

In the shown example there are two such seals 10 located at an axial distance from each other and spread over the length of the gutter element.

The female connecting pieces 7 have a diameter C that is smaller than the inner diameter D of the central part 11 of the gutter element 1 between the connecting pieces 7, such that the depth C and D of the female connecting pieces 7A and 7B in an axial direction X-X' is limited by a collar shaped stop 12, respectively 12A and 12B.

The depth C in the example is such that the collar 12A is approximately opposite the middle of the drainage channel 3 located closest against the end 6A.

The entries of the female connecting pieces 7 have a bevelled edge 13 that broadens as it extends toward the ends 6.

In the example of figure 1 and 2 and 3 the gutter element 1 on the left end 6A has a tubular connecting sleeve 14 which is retracted over its entire axial length E in the female connecting piece 7A at this end 6A, whereas the female connecting piece 7B is carried out without such connecting sleeve 14 and thus is only fitted with aforementioned preinstalled seals 10.

The connecting sleeve 14 in the connecting piece 7A is held in a clamped way in the seals 10 of this part 7A, but with a certain amount of play F in relation to the inner wall 8 of the female connecting piece 7A because the outside diameter G of the connecting sleeve 14 is smaller than the inner diameter H of the connecting pieces 7A and 7B.

The inner diameter I of the connecting sleeve 14 is preferably the same as the inner diameter C of the central part of the gutter element 1.

The depth A of the female connecting piece 7A approximately corresponds with the length E of the connecting sleeve 14 such that the connecting sleeve 14 can be pushed over its entire length E in the female connecting piece 7A and this without it being able to go too deep to avoid the drainage channel 3 being covered over the entire length J.

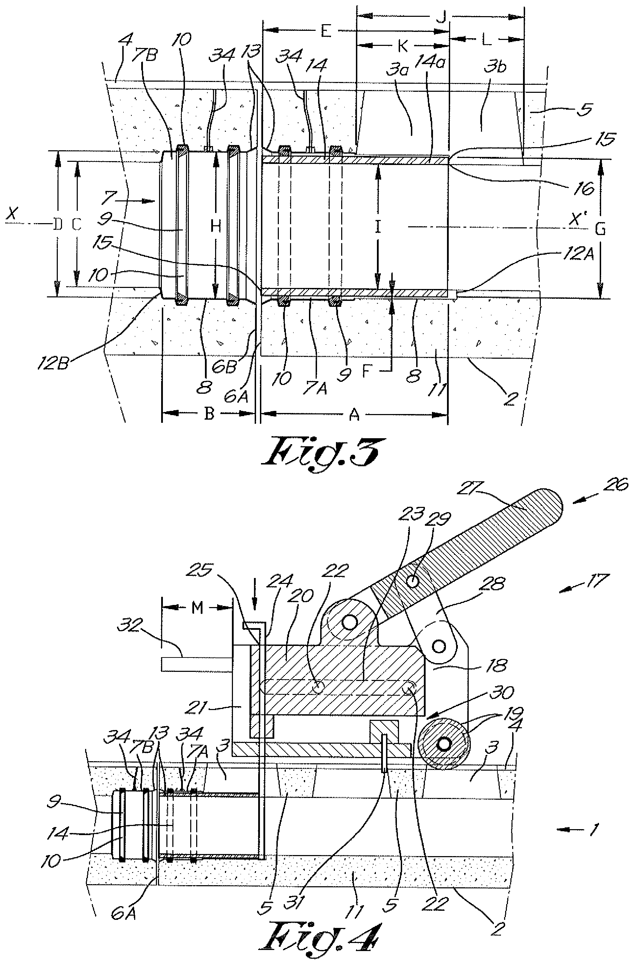

When the connecting sleeve 14 is pushed up against the stop 12A such as in the unused situation of figure 3, the connecting sleeve 14 extends with an overlapping part 14a with length K opposite an overlapping part 3a of the drainage channel 3, such that the end 15 of this overlapping part 14a of the connecting sleeve 14 is accessible from the top via the non-overlapping part 3b with length L of the drainage channel 3 to be able to use this end 15 as a grip element 16 for the tool 17 to be able to push the connecting sleeve 14 partially out of the female connecting piece 7A as illustrated in figures 4 to 6.

The length K of the overlapping part 14a of the connecting sleeve 14 is preferably approximately the same as half the length J of the connecting sleeve 14.

The tool shown by way of example in figure 1, is made of a base 18 in the form of a car with wheels 19 of which, for example, one wheel with a greater diameter is guided axially in the slot 4 of the gutter element 1.

The car is provided with a carriage 20 which has been fitted slidably in an axial direction X-X' between two upstanding cheeks 21 of the car by means of pins 22 which are fitted slidably in slots 23 in the aforementioned 21 cheeks.

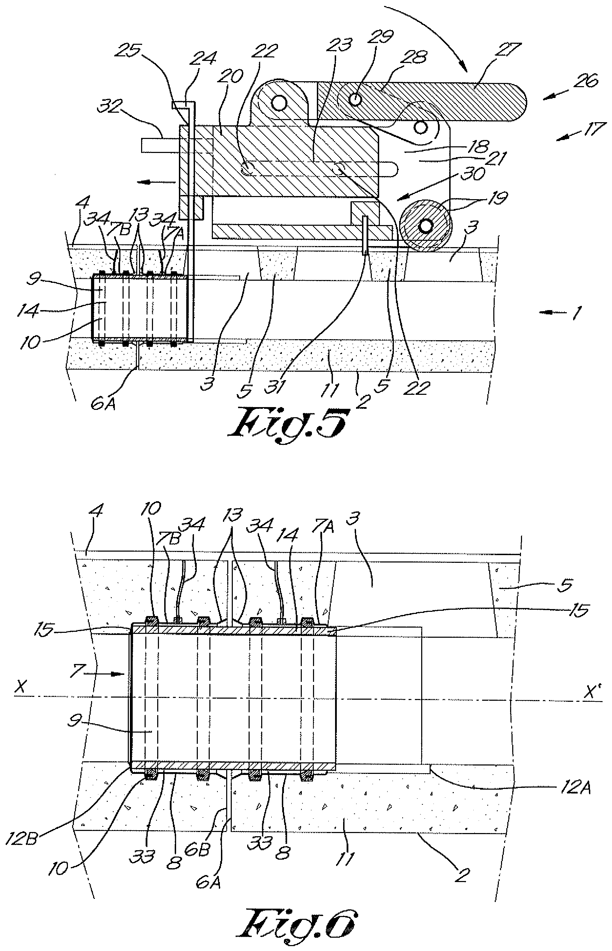

In the carriage 20 a peg 24 has been fitted which is slideable vertically in a guide 25 of the carriage 20 and which is slidable between a retracted position as shown in figure 2 whereby the peg 24 in a radial direction is retracted at least to past the outer diameter G of the connecting sleeve 14 and a pushed in position as shown in figure 5 in which the peg 24 extends via the drainage channel 3 with a length up into the inside of the gutter element 1.

The tool is also provided with power means 26 to be able to move the aforementioned carriage 20 with peg 24 in an axial direction, which means 26 in the example are formed by a lever 27 one end of which is attached hingeably on the carriage 20 and connected with the base 18 and which is connected by means of a crank 28 one end of which is attached hingeably to the base 18 and the other end of which is connected hingeably with the lever 27 in a central point 29 between both ends of the lever 27.

The base 18 is also provided with immobilisation means 30 to be able to temporarily immobilise the base 18 in an axial direction X-X' in relation to the gutter element 1 when pushing out the connecting sleeve 14.

These immobilisation means 30 are formed for example by a pin 31 which can be inserted from the base 18 in a drainage channel 3 as shown in figure 2.

The tool is provided with two arms with which the tool can be moved from one gutter element 1 to a next gutter element 1.

The method to form a gutter with gutter elements 1 such as those of the figures 1 to 3 is simple and as follows.

The gutter elements 1 are put in each other's extension with their ends 6 against each other, whereby an end 6A with connecting sleeve 14 is positioned against or opposite an end 6B without connecting sleeve 14 as shown in figure 2.

The tool 17 is then set up as shown in figure 4 with the pin 31 in a drainage channel 3.

The length M of the arms 32 can be chosen thus that when the tool 17 with the ends is placed with the ends of the arms 32 just above the ends 6 of the adjacent gutter elements 1, the tool is automatically correctly positioned such that the peg 24 is above the non-overlapping part 3b of the drainage channel 3 closest against the ends 6 to be connected and the stop pin 31 against the wall of the connecting piece 5.

It is sufficient to push the peg 24 down in the position as shown in figure 4 and then pushing the lever 26 down, such that the carriage 20 on the car is pushed in the direction of the ends 6 to be connected and consequently, partly because the pin 31 stops the car from being pushed back by way of reaction, the connecting sleeve 14 is pushed partially out of the female connecting piece 7A into the female connecting piece 7B of the other gutter element 1 as shown in figure 5 whereby the connecting sleeve 14 sticks in both gutter elements 1 and is sealed in both gutter elements 1 by the seals 10.

The correct position of the connecting sleeve 14 can be achieved in different ways, for example when the peg 24 hits the end of the drainage channel 3 or when the lever 27 is at the end if its stroke or when the connecting sleeve 14 hits the stop 12B.

The latter will be the case for example when the length K of the overlapping part 14a of the connecting sleeve 14 is the same as or slightly greater than the depth B of the female connecting piece 7B.

Due to the amount of play F a space 33 is formed in each of the connected ends 6A and 6B of the gutter elements 1 between the inner wall 8 of the female connecting pieces 7 and the connecting sleeve 14, which space 33 is demarcated between the seals 10 of the female connecting piece 7 in question as shown in figure 6.

The spaces 33 are connected via channels 34 in the gutter elements 1 with the outside of the gutter. Via these channels 34 the existence of a leak can be detected and possibly remedied by squirting in a liquid sealant.

Thanks to the amount of play F and the elasticity of the seals 10 a slight inclination of the connecting sleeve 14 in female connecting pieces 7 can be permitted, such that the alignment when placing consecutive gutter elements 1 is less critical and any small sagging can be compensated.

It is not excluded that instead of using identical gutter elements as described above, the gutter system is provided with a mix of two or three types of gutter elements 1, more specifically a type as described above and/or other gutter elements which on both ends 6 are fitted with a connecting sleeve 14 which is completely or practically completely slid into the ends 6 and/or yet another type without connecting sleeves 14.

In this case the different varieties of gutter elements are connected against each other in such a way that each time one end 6 of a gutter element 1 with a connecting sleeve 14 connects against an end 6 of a next gutter element 1 without a connecting sleeve 14.

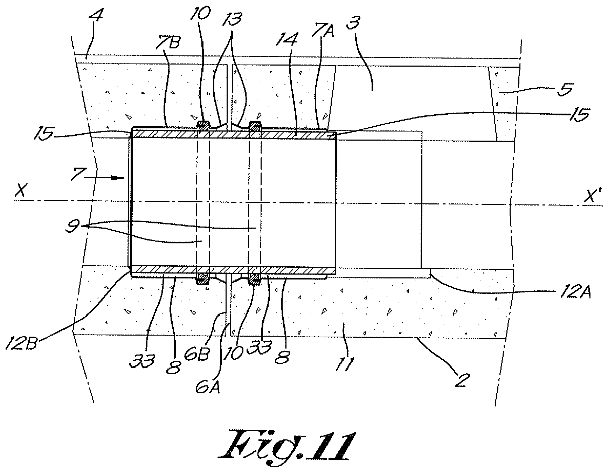

It is not excluded that instead of two seals 10 in one or both female connecting pieces 7 only one single seal 10 or more than two seals 10 are applied. Figure 11, by way of example, shows an embodiment of a gutter element 1 with only one single peripheral slot 9 and seal 10 in both female connecting pieces 7A and 7B.

Nor is it excluded to provide seals 10 in circular peripheral slots of the connecting sleeves 14, possibly in combination with seals 10 in the female connecting pieces 7, whereby the seals can be provided loosely or premounted in the slots 9 in question.

It goes without saying that the tool 17 can be very rudimentary in the form of a peg 24 which, for example, can be inserted manually in a drainage channel 3 to be able to manually slide the connecting sleeve 14 or more sophisticated, e.g. hydraulically or electrically powered.

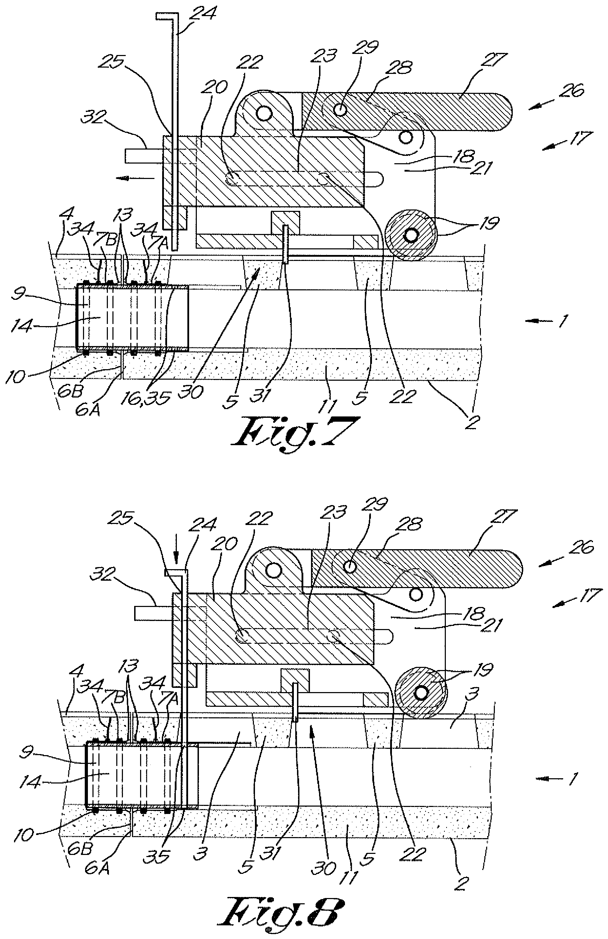

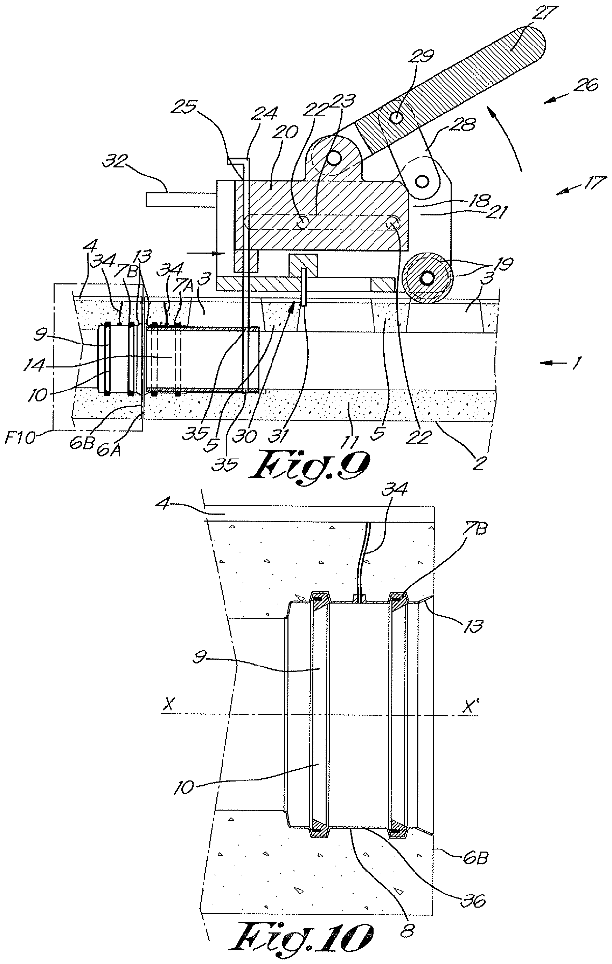

Figures 7 to 9 show a variant of a connecting sleeve 14, whereby in this case the gripping element 16 is formed by one or more lateral channels or slip holes 35 made in the connecting sleeve 14 and which are intended to stick the peg 24 of the tool 17 through.

Using the tool 17 this makes it possible, not only to put a connecting sleeve 14 from one gutter element 1 into another gutter element, but also to retract an already placed connecting sleeve 14 as is shown in the consecutive steps of figures 7 to 9, this with a view to lift out an already placed gutter element 1 from between other already placed gutter elements 1 to open the gutter for maintenance or to replace a seal 10 or a gutter element 1.

The female connecting pieces 7 are preferably formed by a prefabricated element 36 made from a synthetic material, ABS or the like which is poured in with the concrete when the gutter elements 1 are manufactured.

The present invention is by no means limited to the embodiments described as an example and shown in the figures, but a gutter system according to the invention and gutter element and tool applied thereby can be realised in all kinds of forms and dimensions without departing from the scope of the invention.

## Claims

1. Gutter system to form a gutter whereby the gutter system is composed of:
- tubular gutter elements (1) made of concrete or the like which are provided with a series of lateral drainage channels (3) and which on both ends (6) are fitted with a female connecting piece (7) that is bordered by an inner wall (8);
- connecting sleeves (14) to connect female connecting pieces (7) of two adjacent gutter elements (1) located in each other's extension and placed opposite each other whereby the connecting sleeve (14) is entered in each of the aforementioned female connecting pieces (7) when the gutter is in ready-to-use condition (10), and,
- seals for mounting in a peripheral slot (10) of the aforementioned inner wall (8) of a female connecting piece (7) and/or of the outer perimeter of the connecting sleeves (14).
**characterised in that** the gutter elements (1) in unused condition are such that when mounting two adjoining unused gutter elements (1), only one of both adjoining ends (6) is fitted with a connecting sleeve (14) which is completely or practically completely retracted from the female connecting piece (7) at this end (6) and which is such that it is accessible via an aforementioned drainage channel (3) to push out the connecting sleeve (14) from this retracted position over a sufficient distance from the female connecting piece (7) into a female connecting piece (7) of the other gutter element (1) to achieve a leak-tight connection between the two gutter elements (1).

2. Gutter system according to claim 1, **characterised in that** the connecting sleeve (14) has such a length (E) that, when it is completely or practically completely slid into a female connecting piece (7) of this gutter element (1) in unused condition of the gutter element (1), the connecting sleeve (14) is located with a gripping element (16) in an axial direction (X-X') opposite a drainage channel (3) of this gutter element (1), which gripping element (16) can be used to push the connecting sleeve (14) out of the female connecting piece (7).

3. Gutter system according to claim 2, **characterised in that** the gripping element (16) is formed by an end of the connecting sleeve (14) and that the connecting sleeve (14) has such a length (E) that, when slid in unused condition of the gutter element (1) completely or practically completely in an end (6) of the gutter element (1), the connecting sleeve (14), with an overlapping part (14a) partially overlaps a drainage channel (3) of the gutter element (1) in an axial direction (X-X') such that this end of the connecting sleeve (14) is accessible via the nonoverlapping part (3b) of this drainage channel(3).

4. Gutter system according to claim 3, **characterised in that** the overlapping part (14a) of the connecting sleeve (14) has an axial length (K) that corresponds with or is greater than the length with which the connecting sleeve (14) has to be slid into the next female connecting piece (7) of the other gutter element (1) to achieve a leak-tight connection.

5. Gutter system according to claim 4, **characterised in that** the overlapping part (14a) of the connecting sleeve (14) has an axial length (K) which approximately amounts to half the axial length (E) of the connecting sleeve (14).

6. Gutter system according to any one of the previous claims, **characterised in that** the depth (A, B) of the female connecting pieces (7) in axial direction (X-X') is limited by an inward protruding stop (12), in relation to the inner wall (8) of these connecting pieces (7), to prevent the connecting sleeve (14) from being pushed too deep into the gutter elements (1).

7. Gutter system according to claim 6, **characterised in that** the female connecting pieces (7) are formed by a cylindrical part of the gutter element (1) with a greater inner diameter (H) than the inner diameter (C) of the central part of the gutter element (1) between the connecting pieces (7) and that the stop (12) for the connecting sleeve (14) is formed by a stepped transition between the inner diameters (H-C) of the female connecting pieces (7) and the central part.

8. Gutter system according to claim 3 or 4, **characterised in that** the inner diameter (I) of the connecting sleeve (14) is the same or practically the same as the inner diameter (C) of the central part of the gutter element (2).

9. Gutter system according to any one of the previous claims, **characterised in that** the connecting sleeves (14) in mounted ready-to-use condition with a certain lateral amount of play (F) are held in the female connecting pieces (7) and that at least one end (6) of the gutter elements (1) is fitted with two seals (10) at an axial distance from each other which in mounted ready-to-use condition on the connecting sleeve demarcate (14) a space (33) between the inner wall (8) of a female connecting piece (7) and the outer perimeter of the connecting sleeve (14).

10. Gutter system according to claim 9, **characterised in that** the space (33) is connected by means of a channel (34) with the outside of the gutter element (1).

11. Gutter system according to any one of the previous claims, **characterised in that** at least a number of the gutter elements (1) are identical with one end with, and another end without, a connecting sleeve (14).

12. Gutter element that is suitable for application in a gutter system according to any one of the previous claims, **characterised in that** the gutter element (1) on both ends (6) is fitted with a female connecting piece (7) that is bordered by an inner wall, whereby at least one female connecting piece (7) is fitted with a connecting sleeve (14) that is completely or practically completely slid into the female connecting piece (7) in question.

13. Gutter element according to claim 12, **characterised in that** the gutter element (1) is fitted with only one such connecting sleeve (14) that is completely or practically completely slid into one of the female connecting pieces (7).

14. Tool for connecting gutter elements (1) in a gutter system according to any one of the claims 1 to 11, **characterised in that** the tool (17) is fitted with a peg (24) which via an aforementioned drainage channel (3) can be hooked behind a gripping element (16) of the connecting sleeve (14) and which is movable in the drainage channel (3) in question in an axial direction (X-X') to push the connecting sleeve 14 from the retracted position in the female connecting piece (7) of the gutter element (1) axially outward into a female connecting piece (7) of an adjacent gutter element (1) or out again.

15. Tool according to claim 14, **characterised in that** it is fitted with a base (18) with power means thereon (26) to move the aforementioned peg (24) in an aforementioned drainage channel (3) in an axial direction (X-X') to push the connecting sleeve (14) out of the female connecting piece (7) and immobilisation means (30) to temporarily immobilise the base (18) in axial direction (X-X') on a gutter element (1) when pushing out or retracting the connecting sleeve (14).

16. Tool according to claim 15, **characterised in that** the immobilisation means (30) are formed by a pin (31) which from the base (18) can be inserted into a drainage channel (3).

17. Tool according to claim 15 or 16, **characterised in that** the power means (26) are formed by a carriage (20) which is fitted so it can move in an axial direction (X-X') on the base (18) and by a lever (27) which is attached hingeably on the carriage (20) and connected with the base 18 and which is connected by means of a crank (28) one end of which is attached hingeably to the base (18) and the other end of which is connected hingeably with the lever (27) in a central point (29) between both ends of the lever (27).

18. Tool according to claim 17, **characterised in that** the peg (24) is fitted so it can move in a guide (25) which when the tool is used (17) extends in a radial direction of the gutter element (1) between a pushed in radial position whereby the peg (24) in a radial direction is deeper than the outer perimeter of the connecting sleeve (14) and a retracted radial position in which the peg (24) is retracted in a radial direction outside the outer perimeter of the connecting sleeve.

19. Tool according to one of the aforementioned claims 15 to 18, **characterised in that** the base (18) is made as a car with guide means (4.19) to be able to move the car in an axial direction (X-X') of the gutter.

20. Method to realise a gutter **characterised in that** it uses a gutter system according to one of the claims 1 to 11, whereby the gutter elements (1) are placed one after the other with an end (6) against each other in each other's extension in such a way that one of the adjoining ends (6) is fitted with a connecting sleeve (14) that is completely retracted in the female connecting piece (7) of this end (6) and the other adjoining end (6) is not fitted with such a connecting sleeve and whereby the connection of both ends (6) is realised by partially pushing out the connecting sleeve (14) along a channel (3) of the female connecting piece (7) into the female connecting piece of an adjacent end (6).
